# EUROPÄISCHE PATENTANMELDUNG

(11) **EP 1 249 781 A2**
(43) Veröffentlichungstag der Anmeldung: **16.10.2002**
(21) Anmeldenummer: 02007467.0
(22) Anmeldetag: 31.03.2002
(51) Int. Cl.: G06F 17/60

(54) **Statistische Optimierung eines Prozesses und Computerprogramm-Produkt zum Durchführen des Verfahrens**

(30) Priorität: 01.04.2001 DE 10116080
(71) Anmelder: Mischke, Gerald, 71384 Weinstadt-Endersbach (DE)
(72) Erfinder: Le Corro, Armelle, 71384 Weinstadt Endersbach (DE); Klein, Hans-Wolfgang, 70178 Stuttgart (DE); Thiessen, Nicole, 70599 Stuttgart (DE)

(57) **Zusammenfassung**

Mit einem standardisierten, rechnergestützten Verfahren werden mittels Erfolgschancenschätzern Teilprozesse verfolgt. In einer Zeit- / Erfolgschancenebene werden statistische Korridore für eine erfolgreiche Gesamtprozeßführung definiert und überwacht. Dadurch können frühzeitig Fehlentwicklungen in den Teilprozessen automatisch erkannt werden. Dies erlaubt einen frühzeitigen Steuereingriff und so die Optimierung des Gesamtprozesses.

Die Erfindung ist im Prinzip für alle Prozesse mit nur ex-post feststellbaren Erfolgskriterien anwendbar. Investitions- und insbesondere Innovationeprozesse sind hierfür herausragende Beispiele.

## Beschreibung

### Bezeichnung der Erfindung:

Verfahren zur statistischen Optimierung eines Prozesses und Computerprogramm-Produkt zum Durchführen des Verfahrens.

### Technologiegebiet:

Die Erfindung bezieht sich auf ein Verfahren zur statistischen Optimierung eines Prozesses, der eine vorgegebene Anzahl von Teilprozessen aufweist, und auf ein Computerprogramm-Produkt zum Durchführen des Verfahrens.

### Stand der Technik:

Die Portfoliotechnik ist ein seit Jahrzehnten fest etabliertes Instrument im strategischen Planungsprozeß vieler Unternehmen. Einsatz findet Sie insbesondere dann, wenn es um die Positionsbestimmung existierender bzw. neu zu belegender Geschäftsfelder geht. Im Zusammenhang mit strategischer Technologieplanung steht die Einordnung alternativer Technologien entlang den Dimensionen Technologieattraktivität und relative Technologieposition im Vordergrund und insofern die Fragestellung: "In welche Technologie soll was und wieviel investiert werden?"

Die Portfoliotechnik wird somit in aller Regel am Anfang des Prozesses als ein strategisches Entscheidungsinstrument eingesetzt. Im Sinne einer fortlaufenden Verfolgung und Uberwachung strategischer Technologievorhaben findet sie dagegen keine Verwendung.
Gerade in jüngster Zeit wird jedoch eine massive Beschleunigung industrieller Integrationen und Zusammenschlüsse beobachtet. Es entwickeln sich zunehmend stark divisionalisierte Unternehmen mit bisher nicht gekannten wirtschaftlichen und finanziellen Ressourcen. In derartigen Technologiekonzernen tritt die Entscheidung über ein einzelnes Technologieprojekt gegenüber der laufenden Optimierung vieler hunderte Einzelvorhaben eindeutig zurück.

### Mängel des Standes der Technik:

Im Verlauf der 80er und 90er Jahre hat sich die Aufgabenstellung der Unternehmensführung stark verändert. Beherrschung und konsequente Nutzung innovativer Technologien sind zu entscheidenden Voraussetzungen für eine erfolgreiche Position in wettbewerbsintensiven Märkten geworden. Ohne profunde Kenntnis relevanter Technologien auf nahezu allen Ebenen des Managements können Ertragschancen und -risiken nicht mehr beurteilt werden.

Technologieplanung und strategische Planung sind insofern zwingend notwendige und nicht länger trennbare, sondern sich ergänzende Aktivitäten der Unternehmensplanung. Das strategische Technologiemanagement ist somit integrativer Bestandteil der Strategieprozesse eines Unternehmens. Im Mittelpunkt dieses Prozesses steht die Ausrichtung der Technologiepotentiale und -ressourcen auf die Erfolgsfaktoren der einzelnen Geschäftsfelder eines Unternehmens.

Bis in die 70er Jahre hinein wurde das industrielle Angebot weitestgehend durch technologische Fähigkeiten bestimmt. Heute dagegen ist die Nachfrage der auslösende und bestimmende Faktor für den Einsatz von Technologie in einem Unternehmen. Es gilt, in immer kürzeren Zyklen qualitativ hochwertige Produkte bei gleichzeitig beschränkten bzw. gekürzten Aufwendungen zu entwickeln, rechtzeitig zu beherrschen sowie einer schnellen, marktorientierten Verwertung zuzuführen.

Zur Unterstützung dieser Aufgabenstellung bietet der Stand der Technik unterschiedliche Portfoliokonzepte an. Diesen Konzepten ist gemein, daß sie nahezu ausschließlich im Sinne eines strategischen Entscheidungsinstruments Anwendung finden. Sie betrachten demnach in erster Linie die Frage nach der richtigen Projekt bzw. Themenauswahl und geben als eine anschauliches Instrument antworten auf die Fragestellung, "welche Technologie aus welcher Quelle, wann auf welchem Leistungsniveau und zu welchem Zweck genutzt werden soll". Den Ansätzen ist ferner gemein, daß sie den zunehmend an Bedeutung gewinnenden Faktor "Zeit" nicht explizit bzw. nur sehr unzugänglich berücksichtigen.

### Technisches Problem:

Die Problematik wurde anhand von Businessprojekten erläutert. Diese Aufgabenstellung erstreckt sich aber auch in die rein technische Prozeßwelt. Auch hier gilt es Prozesse, die eine Anzahl von Unterprozessen beinhalten, zu optimieren, woraus sich die gleiche Vorgehensweise ergibt. In den weiteren Ausführungen stehen somit die Begriffe "Prozeß" und "Projekt" für Aktivitäten sowohl auf technischem Gebiet als auch in der Geschäftswelt.

Der Erfolg von Prozessen und Investitionen zeigt ein hochgradig zufälliges und somit nicht oder zu schwer planbares Verhalten. Die Effizienz/Effektivität von Prozessen sowie Projekten ist in der Regel nur schwer, sehr ungenau und nur mit erheblichen zeitlichen Rückständen meß- und beurteilbar. Dabei handelt es sich lediglich um ex post Betrachtungen. Zuverlässige Meß- und Berichtsgrößen für eine weitgehende automatisierte Steuerung und Optimierung von Mengen von Projekten bzw. Prozessen sind in der Regel nicht vorhanden bzw. zuverlässig erfaß- und darstellbar.

Werkzeuge und Verfahren zur Beurteilung von Prozessen bzw. Projekten sind nur ex ante bekannt. Standardisierte Verfahren zur Analyse bzw. zur Beurteilung des Zeitverlaufes der jeweiligen Erfolgschancen sind weitgehend unbekannt. Eine Analyse von Literaturquellen zeigt jedoch, daß der Schwerpunkt des Erfolgsrisikos nur im Zeitverlauf der Vorhaben zu suchen ist.

Darüber hinaus beruhen nahezu alle ex ante Beurteilungen von Erfolgschancen zum Teil im erheblichen Maße auf subjektiven Einschätzungen. Diese sind somit für standardisierte und automatisierte, insbesondere aber für EDV basierte Verfahren weitgehend unbrauchbar.

### Problemlösung:

Der Erfindung liegt somit die Aufgabe zugrunde ein Verfahren zur statistischen Optimierung eines Prozesses anzugeben, der eine vorgegebene Anzahl von Teilprozessen aufweist, bei dem die aus dem Stand der Technik bekannten Nachteile überwunden werden. Außerdem sollen Computerprogramm-Produkte angegeben werden, die eine Durchführung des Verfahrens ermöglichen.

Die erstgenannte Aufgabe wird gelöst durch ein Verfahren zur statistischen Optimierung eines Prozesses, der eine vorgegebene Anzahl von Teilprozessen aufweist, wobei gemäß der Erfindung die Prozeßlaufzeit in einer Anzahl von Zeitabschnitten aufgeteilt wird und die Anzahl der Teilprozesse am Ende eines jeden Zeitabschnitts nach vorgegebenen Kriterien soweit reduziert wird, daß ein Schätzwert für den Prozeß über seine Prozeßlaufzeit in einem vorgegebenen Korridor verläuft, der die Randbedingung des Prozesses quantitativ berücksichtigt.

Mit dem vorliegenden Verfahren erhält man einen automatisierten Überblick bzw. eine Analyse des Zustandes von Prozessen. Die Prozesse werden optimiert. Außerdem ist die Möglichkeit zum "statistischen Lernen" aus "Zeitreihenanalysen" von wichtigen Steuer-,Meß und Beobachtungsgrößen gegeben. Dies erlaubt wiederum ein zunehmend genaueres "Trimmen" der Größen.

Die zweitgenannte Aufgabe wird gelöst durch eine Computer-Programmprodukt, das direkt in den internen Speicher eines Computers geladen werden kann und Softwareabschnitte umfaßt, mit denen das erfindungsgemäße Verfahren zur statistischen Optimierung eines Prozesses durchgeführt werden kann.

Außerdem wird die zweitgenannte Aufgabe gelöst durch ein Computer-Programmprodukt, das auf einem computergeeigneten Medium gespeichert ist und computerlesbare Programmittel aufweist, die den Computer anweisen das Verfahren zur statistischen Optimierung eines Prozesses durchzuführen.

Vorzugsweise liegt am Ende eines jeden Zeitabschnitts für jeden vorliegendes Teilprozeß eine quantitative Größe vor, welche als Maß zum reduzieren der Anzahl der Teilprozesse herangezogen wird.

In einer weiteren Ausgestaltung sind Projekte als Prozesse vorgesehen. Es wird eine deutlich verbesserte Einzel- und Globalsteuerung der Projekte aus der Geschäftswelt erreicht.

Vorzugsweise kann die quantitative Größe für jedes Teilprojekt aus formalen und/oder qualitativen Kriterien ermittelt werden. Definition, Steuerung und Beobachtung von wenigen, einfachen und weitgehend automatisch erfaßbaren Kriterien gewährleisten eine Optimierung des Gesamtprojekts.

Insbesondere kann als Projektlaufzeit die Zeit bis zur Umsetzung des Projekts gewählt werden.

In einer weiteren Ausgestaltung der Erfindung wird für die Projekte eines Technologiefelds eine mittlere Projektlaufzeit vorgegeben.

Vorzugsweise hängen die Korridore von der Zeit, dem Technologieangebot und/oder der Kundennachfrage ab.

Insbesondere können den Zonen innerhalb und außerhalb des Korridors vorgegebene Managementaktionen zugeordnet werden.

In einer weiteren Ausgestaltung wird als Schätzer ein formales Kriterium für den Geschäftserfolg gewählt.

Vorzugsweise wird ein Qualitätsfenster zur Überwachung des Projektsfortschritts eingeführt.

Weitere vorteilhafte Ausgestaltungen sind in den Unteransprüchen wiedergegeben.

### Ausführungsbeispiel:

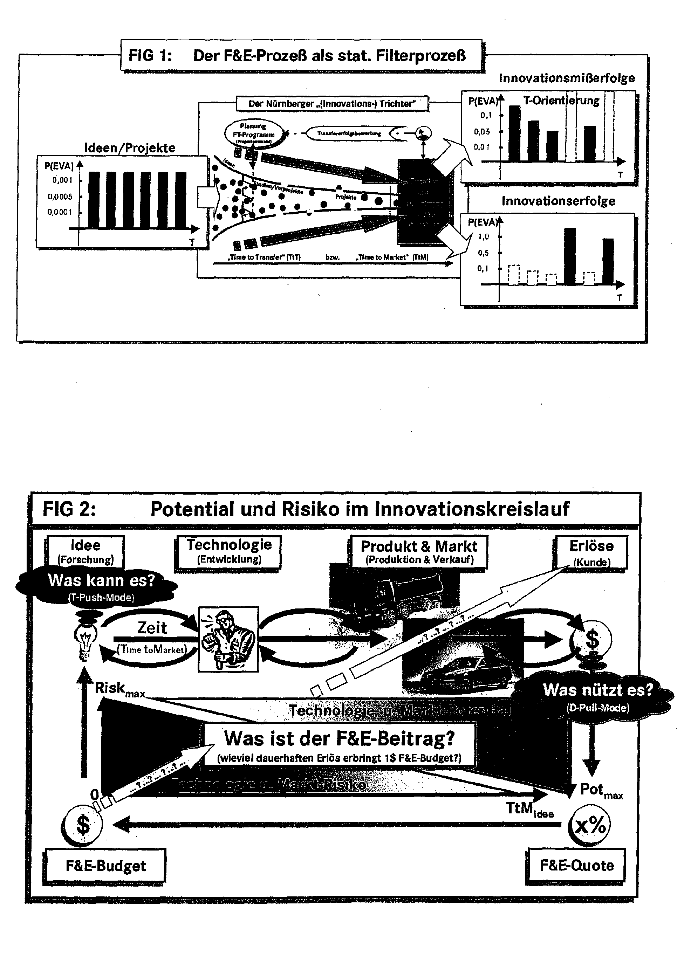

Die Erfindung wird anhand mehrerer Ausführungsbeispiele in den FIG 1 bis 5 näher erläutert, wobei die FIG 1 bis 5 einen Ausschnitt aus einer Prozeßsteuerung in schematischer Darstellung zeigen.

In den FIG wird veranschaulicht, wie eine Menge von Ideen, bei denen es sich um Teilprozesse oder Teilprojekte eines Prozesses bzw. eines Projekts handelt, so gefiltert wird, daß am Ende der Laufzeit eine mengenmäßige Trennung der Prozesse bzw. Projekte (Ideen) nach vorgegebenen Kriterien vorliegt (siehe FIG 1).

Bei einem Verfahren zur statistischen Optimierung eines Prozesses wird die Prozeßlaufzeit in eine Anzahl von Zeitabschnitten aufgeteilt und die Anzahl der Teilprozesse am Ende eines jeden Zeitabschnitts nach vorgegebenen Kriterien soweit reduziert bzw. verändert wird, daß ein Schätzwert für den Prozeß über seine Prozeßlaufzeit in einem vorgegebenen Korridor verläuft, der die Randbedingung des Prozesses quantitativ berücksichtigt. Am Ende eines jeden Zeitabschnitts liegt für jeden aktuellen Teilprozeß eine quantitative Größe vor, welche als Maß zum reduzieren der Anzahl der Teilprozesse herangezogen wird. Das Verfahren läßt sich ebensogut auf das zeitliche Management von Projekten anwenden.

Erfolge und Irrtümer sind immer nur ex post erkennbar. Das Technische Risiko und das Markterfolgsrisiko sind Bestandteile von Forschung und Entwicklung und somit nie im Einzelfall vorhersehbar. Im Verlaufe des Innovationsprozesses sollte bzw. muß daher mit der Zeit die Wahrscheinlichkeit steigen einen Innovationserfolg zu erzielen (siehe FIG 2).

Hieraus ergeben sich Konsequenzen für die Steuerung von Prozessen bzw. von Projekten: Der Innovationsprozeß ist somit ein sukzessiver Approximationsprozeß. Seine Hauptcharakteristika sind die Laufzeit des Projekts bzw. des Prozesses und die Wahrscheinlichkeit für den Erfolg. Es kann auch eine mittlere Laufzeit gewählt werden, die sich aus bereits bekannten Laufzeiten ermitteln läßt. Als Laufzeit kann beispielsweise eine Time to Market oder die Zeit bis zur Umsetzung des Projekts in einer weiteren Phase definiert werden. Diese Größen sind nur expost und nicht während des Prozesses ermittelbar.

Um eine Pipeline von Projekten bzw. Prozessen, eine Aufeinanderfolge mehrerer Prozesse oder Projekte regeln bzw. steuern zu können, sind daher zuerst geeignete Beobachter und dann auf der Grundlage von gesicherten Erkenntnissen geeignete Schätzer zu implementieren.

Ein vorab getätigter optimaler Auswahlprozeß für neue Projekte ist keine Garantie dafür, daß die ausgewählten "guten" Projekte es im Laufe des Prozesses auch bleiben. Es ist somit die Minimierung des Investitionsrisikos anzustreben. Dies gilt nicht nur für den Anfang sondern über die gesamte Laufzeit der Pipeline hinweg (siehe auch FIG 2).

Das Management muß daher stets die gesamte Pipeline betrachten und optimieren und nicht nur einzelne Projekte, denn eine Summe von anfänglich scheinbar optimalen Projekten, ergibt nicht zwingend ein optimales Gesamtprojekt.

Ziel ist stets die gesamte Pipeline in ihrem zeitlichen Verlauf zu beobachten. Aus der Entwicklung von Näherungen/Schätzern für den Projekterfolg, z.B. des Finanzierungsanteils, erhält man maximale Hinweise auf vorliegende Mißstände in Projekten bzw. Projektmengen.

Den Mißständen muß in inhaltlichen Prüfungen nachgegangen werden, da die rein formalen Kriterien für eine Beurteilung allein nicht genügen.

Ein Analyseinstrument basiert notwendigerweise auf der Identifikation und der Beobachtung von formalen Kriterien (Indikatoren/Schätzern) für den Projekterfolg und der Definition von formalen Schranken für diese Kriterien.

Die Umsetzung erfolgt über die Identifikation der Kriterien, d.h. der Schätzer, und der Identifikationen der Schranken. Die Schranken dienen als Maß für die Güte der Kriterien, d.h. ob geeignete oder schlechte Kriterien vorliegen.

Unter der Annahme, daß Projekte bis zum Abschluß (Transfer) geplant sind, wird die Laufzeit der Projekte zur Time to Transfer bzw. zur Time to Market. Beispielsweise für einen Bereich der Forschung ist spätestens zum Transferzeitpunkt die vollständige Finanzierung der notwendige Marktpreis für das Technologieangebot. Dies kann nur in Ausnahmen nicht zutreffen. Die Finanzierung ist ein sehr verläßlicher Schätzer für die Nutzenerwartungen zum Vereinbarungszeitpunkt, d.h. der Projektgenehmigung.

Eine mittlere Projektlaufzeit ist in der Regel nur für ein Technologiegebiet und nur ex post ermitttelbar. Diese Werte müssen daher aus Untersuchungen z.B. des Forschungsprojekt - bzw. des Forschungsthemenerfolges ermittelt werden.

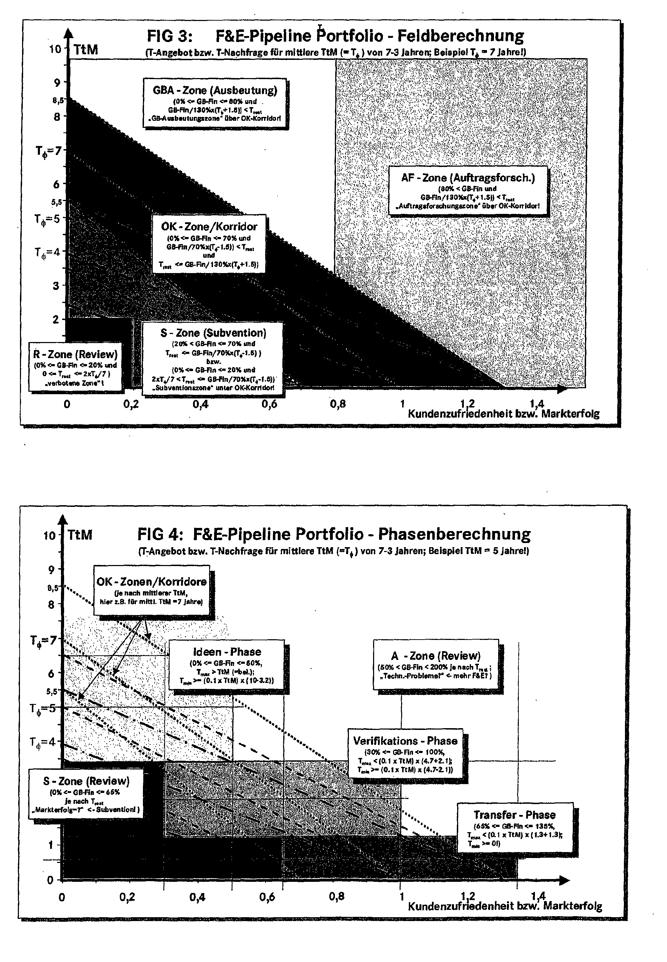

Die Schranken, d.h. zulässige Größen bzw. Anteile, sind Größen die von folgenden Faktoren abhängt: Der Zeit, dem Technologieangebot und der Technologienachfrage des Kunden. Sie stellen zusammen mit einem Ampel- bzw. Sanktionensystem das eigentliche formale Steuerungsinstrumentarium des formalen Managements dar (siehe FIG 3).

Will man den Prozeß stringent auf eine optimale Investitionsrendite, d.h. eine maximale Steigerung des Erfolgs, trimmen, so muß ein Übergang zu einer Phasensteuerung vollzogen werden. Hierbei werden sowohl formale als auch inhaltliche Kriterien, sogenannte Qualitätsfenster (Quality Gates), zur Beurteilung und Erzwingung eines maximalen Projektfortschrittes herangezogen.

Ein angenähert idealer Innovationsprozeß kann so digital approximiert werden. Es werden dabei formale Kriterien eng mit inhaltlichen Steuerungskriterien gekoppelt. Diese bilden dann zusammen ein stringentes Steuerungsinstrumentarium für den zu betrachtenden Prozeß.

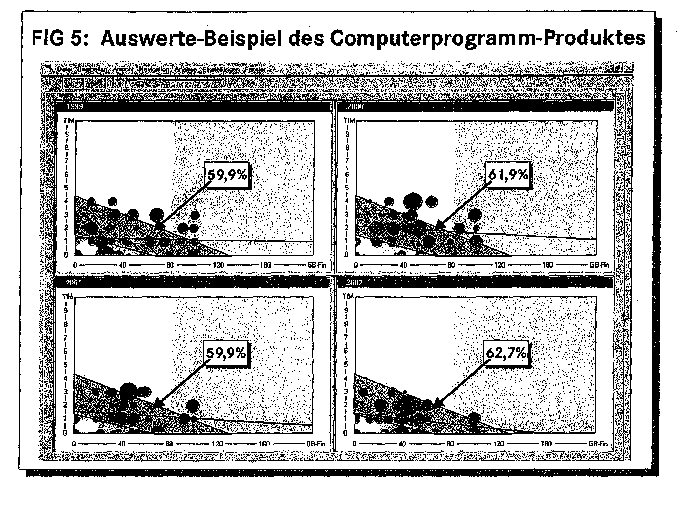

Wesentliche Elemente einer Phasensteuerung sind die Phasen, die Qualitätsfenster und eine geeignete Auswahl. Es wird eine Einteilung in Zeitabschnitte vorgenommen, in denen die Teilprojekte minimalen formalen Kriterien und ebenso minimalen inhaltlichen Kriterien genügen müssen. Desweiteren wird auch ein minimaler Projektfortschritt festgeschrieben. Projekte die außerhalb eines solchen Korridors liegen werden automatisch beendet oder erst gar nicht genehmigt bzw. gestartet (siehe FIG 4).

Die Qualitätsfenster gewährleisten eine Fixierung und Überwachung minimaler inhaltlicher Projektqualitätsstandards als Voraussetzung für den Projekterfolg. Alle Projekte in einer bestimmten Phase N haben die Qualitätskriterien der vorhergehenden Phasen erfüllt und haben das Ziel die Qualitätskriterien der nächsten Phase(N+1)zu erfüllen.

Das Verfahren zur statistischen Optimierung kann als ein Computer-Programmprodukt direkt in den internen Speicher eines Computers geladen werden.

Das Verfahren liegt ebenfalls als ein Computer-Programmprodukt vor, welches auf einem computergeeigneten Medium gespeichert ist und computerlesbare Programmittel aufweist, die den Computer anweisen das Verfahren zur statistischen Optimierung durchzuführen (siehe FIG 5).

### Figuren FIG 1 - 5:

**FIG 1** zeigt, als Anwendungsbeispiel für das Verfahren, schematisch wie im (Zeit-) Verlauf des Innovations- bzw. F&E-Prozesses die erfolgreichen Prozesse bzw. Projekte, nämlich die mit (hohem) positiven Wertbeitrag (EVA), von den weniger erfolgreichen je nach angelegten (Management-) Kriterien separiert werden.

**FIG 2** zeigt, als Anwendungsbeispiel für das Verfahren, schematisch, wie im Zeitverlauf (Time to Market) des Innovations- bzw. des F&E-Prozesses die Risiken (Technologie- bzw. Markt-Risiko) sukzessive minimiert werden. Erfolgreiche Prozesse bzw. Projekte zeichnen sich dabei insbesondere dadurch aus, daß sie i.d.R. auf jeder Stufe der Prozesskette sukzessive ihr Risiko minimieren bzw. ihr Erfolgspotential maximieren.

**FIG 3** zeigt, als Anwendungsbeispiel für das Verfahren, schematisch wie für den (Zeit-) Verlauf des Innovations- bzw. des F&E-Prozesses Zonen bzw. Korridore definiert werden können, in denen die erfolgreichen Prozesse bzw. Projekte, also die mit (voraussichtlich) positivem Wertbeitrag (EVA), statistisch gehäuft auftreten bzw. sich auf halten müssen bzw. sollten. Je nach Zone und Häufigkeit der Prozesse bzw. der Projekte in dieser Zone können so standardisierte Management-Prozesse definiert und überwacht werden.

**FIG 4** zeigt analog zu FIG 3, als Anwendungsbeispiel für das Verfahren, schematisch wie für den (Zeit-) Verlauf des Innovations- bzw. des F&E-Prozesses Zonen (Phasen) definiert werden können, in denen sich die erfolgreichen Prozesse bzw. Projekte, also die mit (voraussichtlich) positivem Wertbeitrag (EVA), nur aufhalten dürfen. Ein Verlassen dieser Zonen (Phasen) hat automatisch eine inhaltliche Überprüfung des Prozesses bzw. Projektes zur Folge. Die so auch inhaltlich deutlich besser abgesicherte Erfolgswahrscheinlichkeit der einzelnen Prozesse bzw. Projekte einer Zone (Phase) erlaubt eine deutliche Optimierung des Resourceneinsatzes entlang der gesamten Prozesskette bzw. entlang der Phasen.

**FIG 5** zeigt, als Anwendungsbeispiel für das Verfahren und für das zugehörige Computerprogramm-Produkt, eine mehrjährige Auswertung eines realen F&E-Prozesses analog zu den Zonen in FIG 3. Die Prozentangaben zeigen hier den Anteil der erfolgversprechenderen Prozesse bzw. Projekte an der Gesamtaktivität des untersuchten Bereiches. Sie geben insbesondere dem verantwortlichen Management Hinweise auf Art und Umfang von Verbesserungspotentialen.

## Patentansprüche

1. Verfahren zur statistischen Optimierung eines Prozesses, der eine vorgegebene Anzahl von Teilprozessen aufweist,
**dadurch gekennzeichnet, daß** die Teilprozesse über eine virtuelle Projektlaufzeit und über einen Schätzwert für die Erfolgswahrscheinlichkeit des Teilprozesses bewertet werden.

2. Verfahren nach Anspruch 1,
**dadurch gekennzeichnet, daß** wenigstens ein statistisch definierter und ermittelter Korridor für den Verlauf des Schätzwertes über die Projektlaufzeit vorgegeben wird.

3. Verfahren nach Anspruch 2,
**dadurch gekennzeichnet, daß** für die Bereiche in- und außerhalb des Korridors definierte Managementaktionen durchgeführt werden.

4. Verfahren nach einem der Ansprüche 1 bis 3
**dadurch gekennzeichnet, daß** Qualitätsfenster zur Überwachung des Prozeßfortschritts eingeführt werden.

5. Verfahren nach Anspruch 4,
**dadurch gekennzeichnet, daß** die Prozeßlaufzeit in eine Anzahl von Zeitabschnitten aufgeteilt wird und die Teilprozesse am Ende eines jeden Zeitabschnitts nach vorgegebenen Kriterien bewertet werden.

6. Verfahren nach Anspruch 5,
**dadurch gekennzeichnet, daß** in Abhängigkeit von der Bewertung Teilprozesse nicht mehr weiter verfolgt werden.

7. Verfahren nach Anspruch 6,
**dadurch gekennzeichnet, daß** Teilprozesse außerhalb des Korridors nicht mehr weiterverfolgt werden.

8. Verfahren nach Anspruch 7,
**dadurch gekennzeichnet, daß** am Ende eines jeden Zeitabschnitts für jeden aktuellen Teilprozeß eine quantitative Größe für seine Bewertung zur Verfügung steht.

9. Verfahren nach Anspruch 8,
**dadurch gekennzeichnet, daß** die quantitative Größe für jeden Teilprozeß aus formalen und/oder qualitativen Kriterien ermittelt wird.

10. Verfahren nach einem der Ansprüche 1 bis 10,
**dadurch gekennzeichnet, daß** als Schätzer ein formales Kriterium für den Geschäftserfolg gewählt wird.

11. Verfahren nach nach einem der Ansprüche 1 bis 10,
**dadurch gekennzeichnet, daß** ein EDV-gestütztes Berichts- und Analysetool den Prozeß bzw. den Prozeßfortschritt überwacht und steuert.

12. Computerprogramm-Produkt, das direkt in den internen Speicher eines Computers geladen werden kann und Softwareabschnitte umfaßt, mit denen ein Verfahren zur statistischen Optimierung eines Prozesses nach einem der Ansprüche 1 bis 11 durchgeführt wird.

13. Computerprogramm-Produkt, das auf einem Computer geeigneten Medium gespeichert ist und computerlesbare Programmittel aufweist, die den Computer anweisen ein Verfahren zur statistischen Optimierung eines Prozesses nach einem der Ansprüche 1 bis 11 durchzuführen.
